(19) **Europäisches Patentamt**
**European Patent Office**
**Office européen des brevets**

(11) **EP 4 779 319 A1**

(12) **EUROPEAN PATENT APPLICATION**

(43) Date of publication:
**22.07.2026 Bulletin 2026/30**

(21) Application number: **26152068.8**

(22) Date of filing: **15.01.2026**

(51) International Patent Classification (IPC):
**G01P 1/12** *(2006.01)* **G01P 15/08** *(2006.01)*

(52) Cooperative Patent Classification (CPC):
**G01P 15/0891; G01P 1/127**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.01.2025 JP 2025006508**

(71) Applicant: **Seiko Epson Corporation**
**Tokyo 160-8801 (JP)**

(72) Inventors:
• **SUDO, Yasuhiro**
**Suwa-shi, Nagano, 392-8502 (JP)**
• **NOMURA, Shoei**
**Suwa-shi, Nagano, 392-8502 (JP)**
• **NISHIZAWA, Ryuta**
**Suwa-shi, Nagano, 392-8502 (JP)**
• **SAKAIDE, Takeru**
**Suwa-shi, Nagano, 392-8502 (JP)**

(74) Representative: **MERH-IP Matias Erny Reichl Hoffmann**
**Patentanwälte PartG mbB**
**Paul-Heyse-Straße 29**
**80336 München (DE)**

(54) **REAL-TIME CLOCK DEVICE, IMPACT LOGGER, AND ELECTRONIC APPARATUS**

(57)     A real-time clock device includes a clocking circuit that generates time information, a memory circuit, a processing circuit that records impact log information based on a plurality of pieces of acceleration data and the time information in a retention period of an impact log in the memory circuit when it is determined that an impact event has occurred based on an acceleration detected by an acceleration sensor, and an interface circuit that outputs the impact log information recorded in the memory circuit.

## FIG. 4

EP 4 779 319 A1

## Description

The present application is based on, and claims priority from JP Application Serial Number 2025-006508, filed January 17, 2025, the disclosure of which is hereby incorporated by reference herein in its entirety.

BACKGROUND

1. Technical Field

The present disclosure relates to a real-time clock device, an impact logger, an electronic apparatus, and the like.

2. Related Art

JP-A-2019-152563 discloses an impact detector. The impact detector houses a timepiece, an acceleration sensor, a control unit, a storage unit, a wireless communication unit, a battery, and a casing in a housing made of translucent or transparent resin. The control unit generates impact data, and the storage unit stores the impact data.
JP-A-2019-152563 is an example of the related art.
In JP-A-2019-152563, the acceleration data when the acceleration exceeds a predetermined threshold is stored in association with the time, however, there is a problem that it is impossible to appropriately determine whether a damage boundary is exceeded with only acceleration data at one point.

SUMMARY

An aspect of the present disclosure relates to a real-time clock device including a clocking circuit that generates time information, a memory circuit, a processing circuit that records impact log information based on a plurality of pieces of acceleration data and the time information in a retention period of an impact log in the memory circuit when it is determined that an impact event has occurred based on an acceleration detected by an acceleration sensor, and an interface circuit that outputs the impact log information recorded in the memory circuit.
Another aspect of the present disclosure relates to an impact logger including the real-time clock device described above and the acceleration sensor.
Another aspect of the present disclosure relates to an electronic apparatus including the real-time clock device described above, the acceleration sensor, and a processing device that reads the impact log information from the real-time clock device.

BRIEF DESCRIPTION OF THE DRAWINGS

FIG. 1 shows a configuration example of a real-time clock device according to an embodiment.

FIG. 2 shows a detailed configuration example of the real-time clock device according to the embodiment.

FIG. 3 shows a configuration example of an impact logger and an electronic apparatus according to the embodiment.

FIG. 4 shows a configuration example of the impact logger and the electronic apparatus according to the embodiment.

FIG. 5 shows a placement example of the impact logger.

FIG. 6 shows a placement example of the impact logger.

FIG. 7 shows a method of acquiring impact log information.

FIG. 8 shows an example of a method of calculating a change in velocity.

FIG. 9 shows a damage boundary curve.

FIG. 10 is a flowchart illustrating a processing example of the embodiment.

FIG. 11 is a flowchart illustrating a processing example of the embodiment.

FIG. 12 shows various examples of a method of storing acceleration data and time information.

FIG. 13 shows an implementation example of the impact logger.

FIG. 14 shows an implementation example of the impact logger.

FIG. 15 shows a detailed configuration example of an acceleration sensor and a detection circuit.

FIG. 16 shows a structural example of an impact logger module.

FIG. 17 shows a structural example of the impact logger module.

DESCRIPTION OF EMBODIMENTS

An embodiment will hereinafter be described. Note that the present embodiment to be described below does not unduly limit the present disclosure described in What is claimed is. Further, not all configurations described in the present embodiment are necessarily essential component elements.

1. Real-Time Clock Device

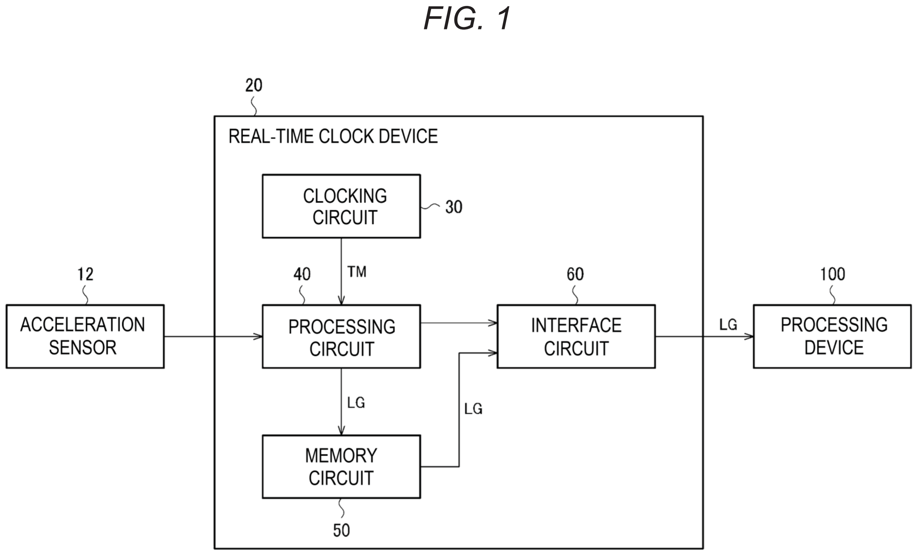

FIG. 1 shows a configuration example of a real time clock device 20 of the present embodiment. The real-time clock device 20 is, for example, a device that generates time information by clocking processing. The real-time clock device 20 of FIG. 1 includes a clocking circuit 30, a processing circuit 40, a memory circuit 50, and an interface circuit 60. The real-time clock device 20 is not limited to the configuration in FIG. 1, but various modifications can be made by omitting part of these component elements, adding other component elements, or replacing part of the component elements with other component elements.

The clocking circuit 30 generates time information TM based on a predetermined clock signal. The clock signal is, for example, an oscillation clock signal. For example, the clocking circuit 30 performs clocking and counting processing based on a frequency-divided clock signal obtained by dividing a clock signal by, for example, a frequency divider circuit, and generates, for example, time information TM indicating the current time by the clocking and counting processing. For example, a frequency-divided clock signal having a frequency of, for example, 1 Hz or 1 kHz is generated by frequency division of the clock signal by the frequency divider circuit, and the time information TM is generated by clocking processing based on the frequency-divided clock signal. For example, the clocking circuit 30 includes a clocking counter for counting each of seconds, minutes, hours, days, months, and years, and generates the time information TM by counting processing of the clocking counter. The time information TM may be, for example, the data of the count value of the time counter itself, or may be data indicating all or some of year, month, day, hour, minute, and second. The time information TM is output from the clocking circuit 30 to the processing circuit 40. The generated time information TM can be output to the outside via, for example, the interface circuit 60.

The processing circuit 40 is a circuit that performs various kinds of arithmetic processing and control processing in the real-time clock device 20. The processing circuit 40 can be implemented by, for example, a logic circuit, specifically an ASIC (application specific integrated circuit) circuit by automatic placement and routing such as a gate array.

The processing circuit 40 generates impact log information LG based on an acceleration detected using an acceleration sensor 12. Specifically, when it is determined that an impact event has occurred, the processing circuit 40 generates the impact log information LG based on a plurality of pieces of acceleration data and the time information TM in the retention period of impact logs. Then, the processing circuit 40 records the generated impact log information LG in the memory circuit 50. The details of the impact log information LG will be described later. The processing circuit 40 may perform processing of correcting the time information TM from the clocking circuit 30 based on a reference signal. The reference signal is, for example, a 1PPS (Pulse Per Second) signal which is a timing standard signal in GPS (GNSS) or the like. Alternatively, a signal obtained by time synchronization based on a network time protocol (NTP), a precision time protocol (PTP), or the like may be used as a reference signal.

The acceleration sensor 12 is, for example, a capacitive acceleration sensor using silicon micro electro mechanical systems (MEMS). Alternatively, the acceleration sensor 12 may be an acceleration sensor using a quartz crystal oscillator, an acceleration sensor using a piezoelectric element, or the like.

The memory circuit 50 is a circuit that stores information, and is implemented by a semiconductor memory such as a RAM or a nonvolatile memory. The RAM is, for example, a static random access memory (SRAM) or a dynamic random access memory (DRAM). The nonvolatile memory may be an electrically writable ROM, for example, an electrically erasable programmable read only memory (EEPROM). The memory circuit 50 stores the impact log information LG generated by the processing circuit 40.

The interface circuit 60 is a circuit for external communication. For example, the interface circuit 60 performs communication based on a given communication standard with an external processing device 100. For example, the interface circuit 60 performs serial communication by an inter-integrated circuit (I2C), a serial peripheral interface (SPI), or the like. In a case of serial communication, the real-time clock device 20 has communication terminals such as a serial clock input terminal and a serial data input/output terminal. The interface circuit 60 outputs the impact log information LG recorded in the memory circuit 50. For example, the interface circuit 60 outputs the impact log information LG to the external processing device 100. The processing device 100 is, for example, a personal computer (PC) that collects the impact log information LG or a microcomputer incorporated in an electronic apparatus.

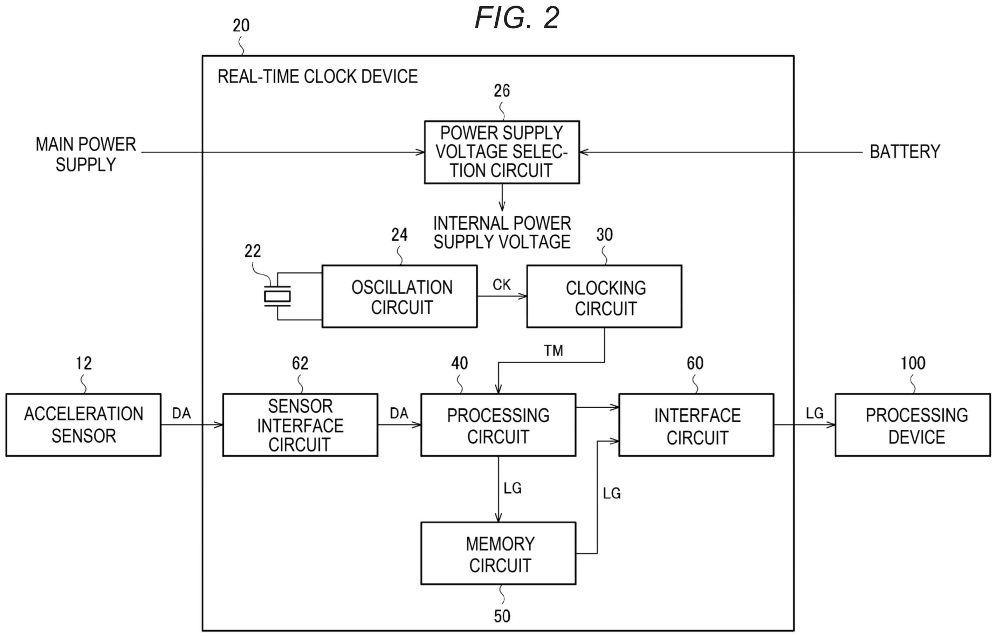

FIG. 2 shows a detailed configuration example of the real-time clock device 20. In FIG. 2, in addition to the component elements in FIG. 1, a vibrator 22, an oscillation circuit 24, a power supply voltage selection circuit 26, and a sensor interface circuit 62 are further provided. The real-time clock device 20 is not limited to the configuration in FIG. 2, but various modifications can be made by omitting part of these component elements, adding other component elements, or replacing part of the component elements with other component elements. For example, the vibrator 22 may be provided outside the real-time clock device 20, and the acceleration sensor 12 may be provided inside the real-time clock device 20. The power supply voltage selection circuit 26 may be omitted.

The vibrator 22 is an element that generates mechanical vibration by an electric signal. The vibrator 22 can be implemented by a vibrator element such as a quartz crystal vibrator element. For example, the vibrator 22 can be implemented by a thickness-shear vibrating quartz crystal vibrator element, a cut angle of which is an AT cut or an SC cut, a tuning fork type quartz crystal vibrator element, a double tuning fork type quartz crystal vibrator element, or the like. Note that the vibrator 22 of the present embodiment can also be implemented by various vibrator elements such as a vibrator element other than the thickness-shear vibrating type, the tuning-fork type, or the double tuning-fork type vibrator element, or a piezoelectric vibrator element made of a material other than quartz crystal. For example, a surface acoustic wave (SAW) resonator, or a micro electro mechanical systems (MEMS) vibrator as a silicon vibrator formed using a silicon substrate may be adopted as the vibrator 22.

The oscillation circuit 24 is a circuit that outputs an oscillation clock signal CK. For example, the oscillation circuit 24 generates an oscillation signal by an oscillation operation by the vibrator 22 and outputs an oscillation clock signal CK based on the oscillation signal. For example, the oscillation circuit 24 generates an sinusoidal oscillation signal by driving and oscillating the vibrator 22 such as a quartz crystal vibrator by a drive circuit, and outputs a rectangular oscillation clock signal CK by performing waveform shaping on the generated oscillation signal by a waveform shaping circuit. The oscillation clock signal CK is, for example, a clock signal having a frequency of 32.768 KHz. The frequency of the oscillation clock signal CK is not limited thereto, and may be a frequency of 32 KHz or the like. The real-time clock device 20 may include a clock output terminal that outputs the oscillation clock signal CK.

For example, the oscillation circuit 24 can be implemented by an oscillation drive circuit electrically coupled to one end and the other end of the vibrator 22 and a passive element such as a capacitor or a resistor. The drive circuit can be implemented by, for example, a bipolar transistor or a CMOS inverter circuit. The drive circuit is a core circuit of the oscillation circuit 24, and the drive circuit drives the vibrator 22 by a voltage or a current to oscillate the vibrator 22. As the oscillation circuit 24, oscillation circuits of various types such as an inverter type, a Pierce type, a Colpitts type, or a Hartley type can be used. The oscillation circuit 24 may include a variable capacitance circuit. The oscillation frequency of the oscillation circuit 24 is adjusted by adjusting the capacitance value of the variable capacitance circuit. For example, a temperature compensation circuit that performs temperature compensation processing based on a temperature detection signal from a temperature sensor (not illustrated) is provided and the capacitance of the variable capacitance circuit is adjusted based on a temperature compensation result in the temperature compensation circuit, and thus it is possible to implement temperature compensation of the oscillation frequency. Note that the coupling in the present embodiment is electrical coupling. The electrical coupling refers to coupling that enables transmission of an electrical signal, and is coupling that enables transmission of information with the electrical signal. The electrical coupling may be coupling via a passive element and the like.

The sensor interface circuit 62 is a circuit that interfaces with the acceleration sensor 12. The sensor interface circuit 62 receives acceleration data DA from the acceleration sensor 12. Then, the received acceleration data DA is output to the processing circuit 40. As the sensor interface circuit 62, for example, a circuit for serial communication such as an I2C or SPI can be used. According to the configuration, the sensor interface circuit 62 receives the acceleration data DA from the acceleration sensor 12 outside the real-time clock device 20 and outputs the acceleration data to the processing circuit 40, so that the generation of the impact log information by the processing circuit 40 can be implemented. The acceleration data DA output by the acceleration sensor 12 may be directly input to the processing circuit 40 without providing the sensor interface circuit 62.

The power supply voltage selection circuit 26 is a circuit that selects an internal power supply voltage to be supplied to an internal circuit of the real-time clock device 20. For example, the power supply voltage selection circuit 26 selects one power supply voltage of a power supply voltage from a battery such as a secondary cell and a power supply voltage from a main power supply via a USB, a PC, or the like as an internal power supply voltage, and supplies the selected power supply voltage to the internal circuit of the real-time clock device 20. The power supply voltage selection circuit 26 supplies the power supply voltage from the main power supply to the battery so that the battery can be charged. Accordingly, even when the main power is not supplied, the real-time clock device 20 can be operated based on the power supply voltage from the battery.

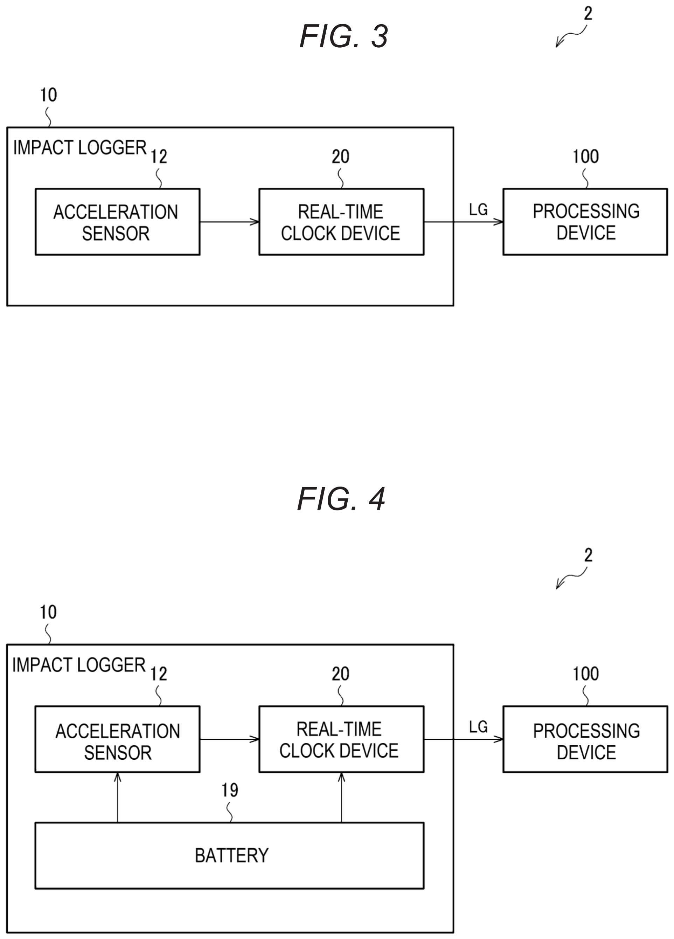

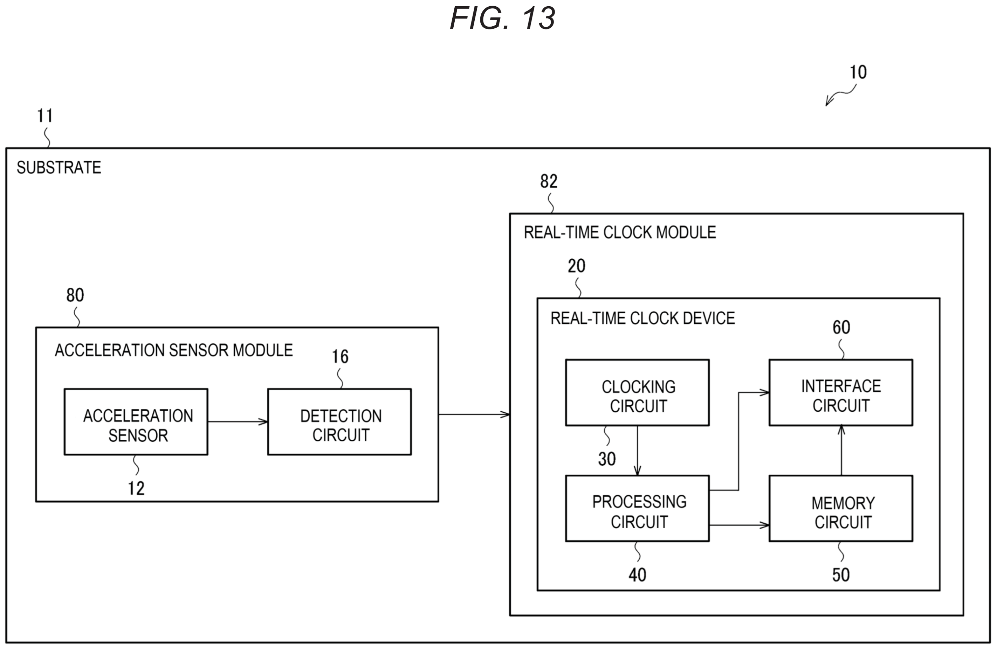

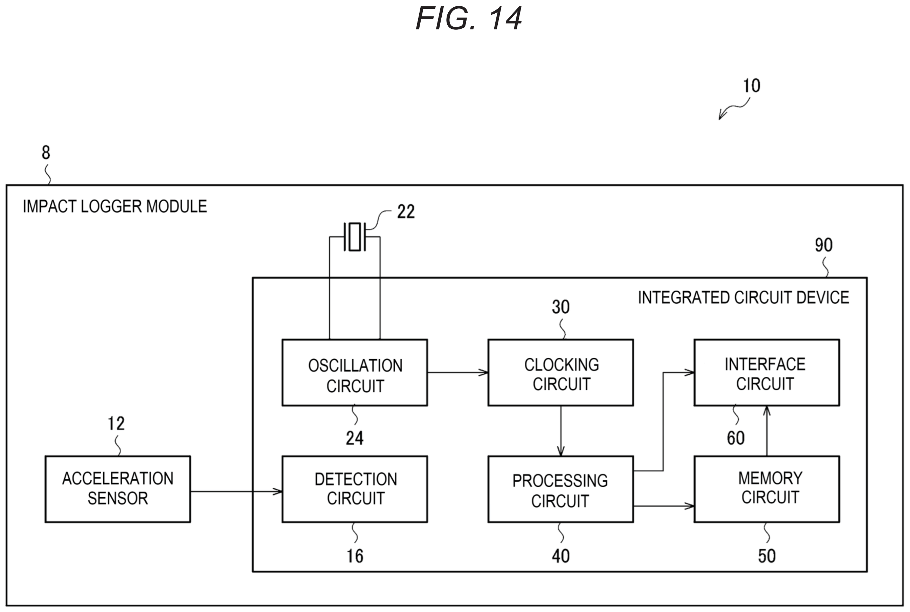

FIGS. 3 and 4 show configuration examples of the impact logger 10 and an electronic apparatus 2 of the present embodiment. In FIG. 3, the impact logger 10 includes the acceleration sensor 12 and the real-time clock device 20. The electronic apparatus 2 includes the impact logger 10 and the processing device 100. That is, the electronic apparatus 2 includes the acceleration sensor 12, the real-time clock device 20, and the processing device 100. The impact log information LG from the real-time clock device 20 is output to the external processing device 100 or the like. According to the configuration, it is possible to implement the impact logger 10 in which the impact log information LG based on the acceleration detected by the acceleration sensor 12 is recorded in the memory circuit 50 of the real-time clock device 20. As shown in FIG. 13 described later, the impact logger 10 may include an acceleration sensor module 80 in which the acceleration sensor 12 is housed in a package and a real-time clock module 82 in which the real-time clock device 20 is housed in a package. Alternatively, as shown in FIG. 14 described later, the impact logger 10 may be an impact logger module 8 in which the acceleration sensor 12 and an integrated circuit device 90 provided with the circuits of the real-time clock device 20 are housed in a package.

In FIG. 4, the impact logger 10 includes a battery 19 in addition to the acceleration sensor 12 and the real-time clock device 20. The acceleration sensor 12 and the real-time clock device 20 operate based on the power supply voltage from the battery 19. The battery 19 stores electrical energy chemically or electrically, and is, for example, a primary cell, a secondary cell, or a capacitor. As the primary cell, for example, a small button battery or the like is assumed. The secondary cell is, for example, a lithium ion battery. The capacitor may be an electrolytic capacitor or the like, or may be a so-called super capacitor. The battery 19 is provided in the impact logger 10, and thus the real-time clock device 20 and the acceleration sensor 12 can be operated based on the power supply voltage from the battery 19 even when there is no power supply from the outside. The impact log information LG is stored in the memory circuit 50 of the real-time clock device 20, and the stored impact log information LG is output to the processing device 100 or the like, so that the impact logger 10 can determine the occurrence of damage or the like due to an impact on an object on which the impact logger is provided.

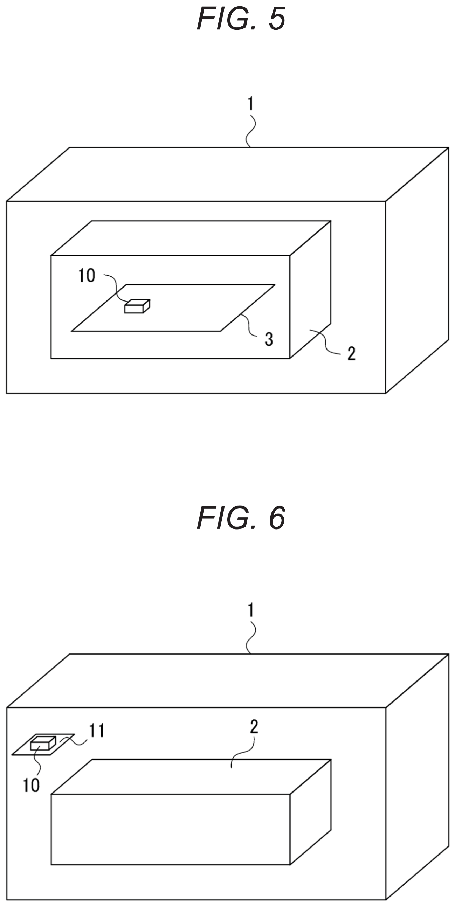

FIGS. 5 and 6 show placement examples of the impact logger 10. In FIG. 5, the impact logger 10 is mounted on a substrate 3 of the electronic apparatus 2. Various components such as an IC, a resistor, a capacitor, and a connector for implementing the functions of the electronic apparatus 2 are mounted on the substrate 3. There are various electronic apparatuses 2, and examples thereof include a printer, a projector, a television apparatus, a camera, a personal computer, a display, a game machine, a smartphone, a smart watch, a head-mounted display, and an audio apparatus. The electronic apparatus 2 is housed in a packaging material 1 and transported. The impact logger 10 senses impact information in a distribution process of the electronic apparatus 2 as an object of damage detection.

In FIG. 6, the impact logger 10 is mounted on a substrate 11 for an impact logger separate from the electronic apparatus 2. The electronic apparatus 2 is housed in the packaging material 1, and the impact logger 10 is disposed inside the packaging material 1. The impact logger 10 senses impact information applied to the packaging material 1, thereby sensing impact information applied to the electronic apparatus 2 similarly housed in the packaging material 1.

The placement position of the impact logger 10 is not limited to the inside of the packaging material 1. For example, the impact logger 10 may be disposed inside an article that is a non-electronic apparatus. Alternatively, the impact logger 10 may be disposed inside a cargo compartment of an automobile, a railway, a ship, or an aircraft that transports articles, or may be mounted inside a container that stores articles during transportation.

When the impact logger 10 includes the acceleration sensor module 80 and the real-time clock module 82 as illustrated in FIG. 13 described later, the acceleration sensor module 80 and the real-time clock module 82 are mounted on the substrate 3 in FIG. 5 or the substrate 11 in FIG. 6. When the impact logger 10 is the impact logger module 8 in which the acceleration sensor 12 and the integrated circuit device 90 are housed in a package as illustrated in FIG. 14, the impact logger module 8 is mounted on the substrate 3 or the substrate 11.

As described above, as illustrated in FIGS. 1 and 2, the real-time clock device 20 of the present embodiment includes the clocking circuit 30 that generates time information, the memory circuit 50, the processing circuit 40, and the interface circuit 60. When it is determined that an impact event has occurred based on the acceleration detected by the acceleration sensor 12, the processing circuit 40 records impact log information based on a plurality of pieces of acceleration data and time information in the retention period of the impact log in the memory circuit 50. The interface circuit 60 outputs the impact log information recorded in the memory circuit 50.

According to the configuration, when an impact event occurs, the impact log information based on the plurality of pieces of acceleration data and the time information in the retention period of the impact log are recorded in the memory circuit 50, and the impact log information can be output to the outside via the interface circuit 60. The impact log information is information based on the plurality of pieces of acceleration data and the time information in the retention period of the impact log. Therefore, by using the impact log information based on the plurality of pieces of acceleration data and the time information, it is possible to more accurately determine the occurrence of damage to the object due to the impact when the impact event occurs, as compared with a case where the determination is performed based on one piece of acceleration data.

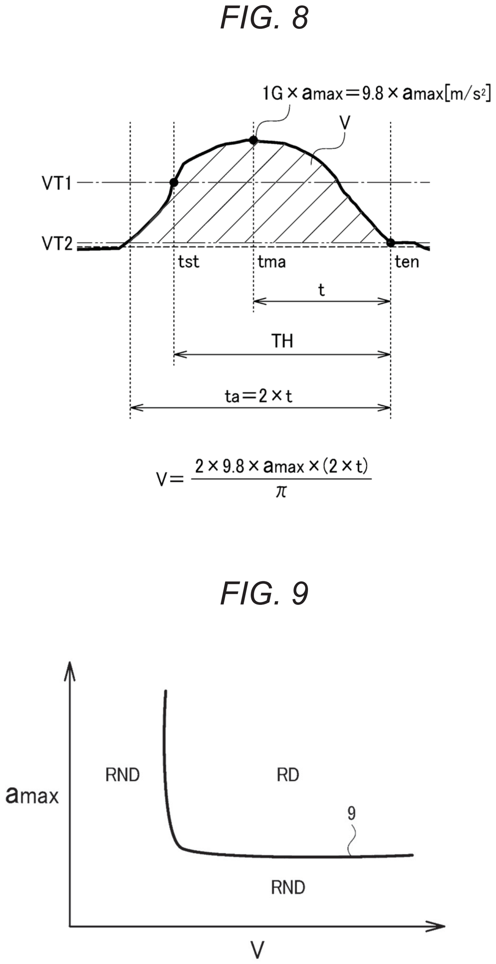

For example, as a comparative example of the present embodiment, there is an impact logger that is equipped with an acceleration sensor and records the maximum acceleration and the time when an impact occurs. However, in this impact logger, only the maximum acceleration at the time of occurrence of an impact can be acquired, and it cannot be determined whether an impact belonging to a damaged region in a damage boundary curve described later in FIG. 9 is applied.

As another comparative example of the present embodiment, there is a transportation environment recorder that is equipped with a large-capacity memory and records all acceleration data. However, in the transportation environment recorder, it is possible to determine whether an impact belonging to the damaged region in the damage boundary curve is applied, but it is necessary to mount the large-capacity memory and write sensor data via a microcomputer at all times. Therefore, power consumption is large, and a large-capacity battery is also required for long-term recording. Accordingly, there is a problem that the price is higher and the size is larger.

In this regard, according to the present embodiment, the impact logger 10 that detects an impact can be configured with the real-time clock device 20 and the acceleration sensor 12, and reduction in power consumption, cost, and size can be achieved. Furthermore, even in such a configuration, the maximum acceleration, the time information, and the like can be recorded, it is possible to determine whether the damage boundary curve is exceeded, and it is possible to determine whether the object is damaged. Moreover, the number of data recording points can be reduced, and the impact log information can be recorded even when the memory capacity of the memory circuit 50 is small.

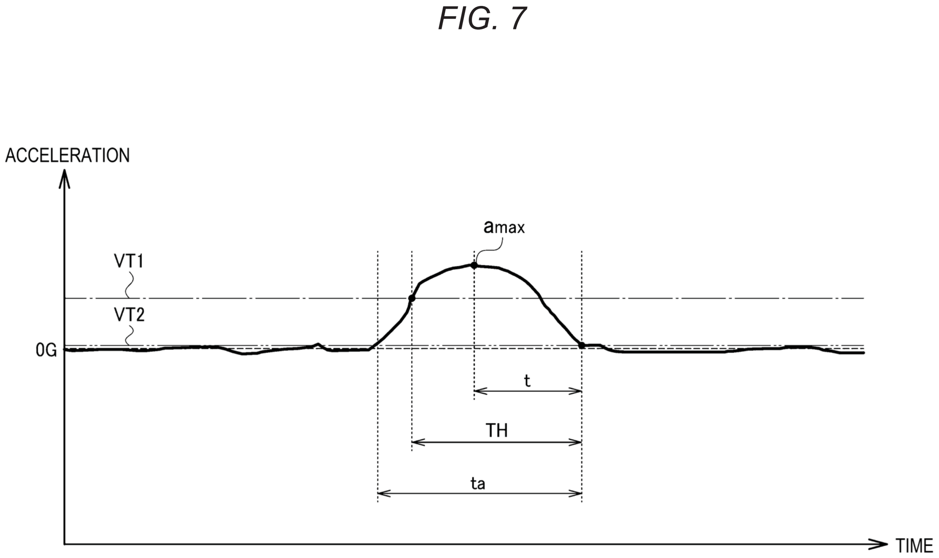

FIG. 7 shows a method of acquiring impact log information according to the present embodiment. In FIG. 7, an acceleration threshold VT1 and an acceleration threshold VT2 are set. The threshold VT1 is a first threshold, for example, a threshold for determination of the start of retention of the impact log. The threshold VT2 is a second threshold, for example, a threshold for determination of the end of retention of the impact log. These thresholds VT1 and VT2 are stored in the memory circuit 50 of the real-time clock device 20. The thresholds VT1 and VT2 can be set to different values for each user of the impact logger 10. For example, the thresholds VT1 and VT2 desired by the user are written in the memory circuit 50 of the real-time clock device 20 using a PC, a writing device, or the like.

In FIG. 7, when the acceleration detected by the acceleration sensor 12 becomes equal to or more than the threshold VT1, a retention period TH of the impact log starts, and the processing circuit 40 starts recording the impact log information. For example, in FIGS. 5 and 6, various impacts are applied to the object of damage detection during transportation or the like, and when all of the impact logs are recorded, problems that reduction in power consumption is hindered and the memory capacity required for the memory circuit 50 increases occur. Therefore, the threshold VT1 is set to a value at which the object may be damaged by the impact. When the acceleration detected by the acceleration sensor 12 becomes equal to or less than the threshold VT2, the retention period TH of the impact log ends, and the processing circuit 40 ends the recording of the impact log information. That is, in the present embodiment, the processing circuit 40 records, for example, the impact log information in the retention period TH after the acceleration becomes equal to or more than the threshold VT1 and before the acceleration becomes equal to or less than the threshold VT2 in the memory circuit 50. Here, the threshold VT2 is less than the threshold VT1. In FIG. 7, a time t is an elapsed time after the acceleration becomes the maximum acceleration amax and before the acceleration becomes the threshold VT2 or less. A period ta is a period in which the impact of the impact event acts.

In this case, as illustrated in FIG. 7, the retention period TH of the impact log is a period including a time when the acceleration becomes the maximum acceleration amax in the impact event. For example, the thresholds VT1 and VT2 are set such that the retention period TH is a period including the time when the acceleration becomes the maximum acceleration amax. According to the configuration, the impact log information based on the maximum acceleration amax can be recorded in the memory circuit 50, and the damage determination by the damage boundary curve based on the maximum acceleration amax can be implemented.

When the acceleration becomes equal to or more than the threshold VT1, the processing circuit 40 starts recording the impact log information. For example, the time when the acceleration becomes equal to or more than the threshold VT1 is the start time of the retention period TH of the impact log. According to the configuration, it is not necessary to record the impact log information until the acceleration becomes equal to or more than the threshold VT1, and it is possible to implement reduction in power consumption of the real-time clock device 20 and to implement saving of the memory capacity of the memory circuit 50.

In addition, the processing circuit 40 records the impact log information in the memory circuit 50 with a period after the acceleration becomes equal to or more than the threshold VT1 as a retention period TH and before the acceleration becomes equal to or less than the threshold VT2. For example, the processing circuit 40 generates impact log information based on a plurality of pieces of acceleration data detected by the acceleration sensor 12 in the retention period TH, and stores the impact log information in the memory circuit 50. According to the configuration, the processing circuit 40 can obtain the impact log information using the acceleration data in the period after the acceleration becomes equal to or more than the threshold VT1 and before the acceleration becomes equal to or less than the threshold VT2, and record the impact log information in the memory circuit 50. Therefore, for example, by setting the threshold VT2 to a smaller value, the impact log information can be generated using the acceleration data in the period necessary for more accurate damage determination and recorded in the memory circuit 50.

For example, the threshold VT2 is smaller than the threshold VT1. That is, the threshold VT2 is sufficiently smaller than the threshold VT1, for example, a value close to 0 G. Here, G is the gravitational acceleration, for example, 9.8 m/s$^2$. For example, as the threshold VT2 is smaller, the impact log can be recorded in the longer retention period TH and more accurate damage determination can be performed. However, when the threshold VT2 is too small, a problem caused by noise or the like occurs, and thus the threshold VT2 is determined in consideration of a noise level in acceleration detection, detection accuracy of the acceleration sensor 12, and the like.

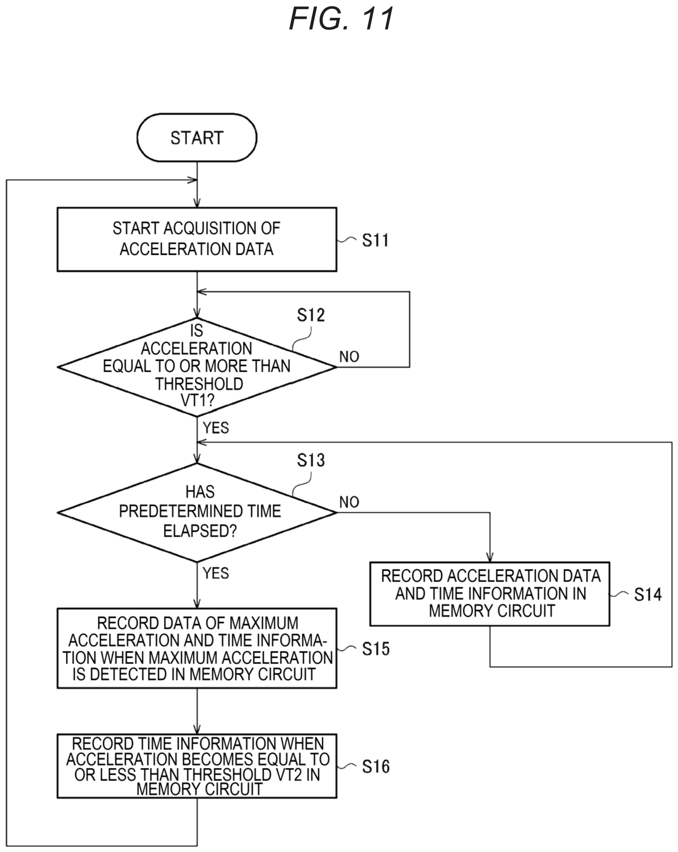

As will be described later with reference to FIG. 11, the processing circuit 40 may record the impact log information in the memory circuit 50 with a period until a predetermined time elapses after the acceleration becomes equal to or more than the threshold VT1 as the retention period TH. For example, the occurrence period of the impact event is a period of a certain length. Therefore, with the period until the predetermined time elapses after the acceleration becomes equal to or more than the threshold VT1 as the retention period TH of the impact log, it is possible to acquire the impact log information necessary for accurate damage determination.

Next, an example of damage determination based on a damage boundary curve will be described with reference to FIGS. 8 and 9. For example, in FIG. 8, the time from when the acceleration becomes the maximum acceleration amax to when the acceleration becomes equal to or less than the threshold VT2 is t. The threshold VT2 is set to a sufficiently small value and the signal waveform of the acceleration in FIG. 8 when an impact is applied is considered as a half sine wave, ta as a period in which the impact of the impact event acts can be expressed by ta = 2 × t. A change in velocity corresponds to an area obtained by integrating the signal waveform of the acceleration. When the half sine wave is integrated in the range from 0 to $\pi$, the area is S = 2. The gravitational acceleration is G = 9.8 m/s$^2$. Therefore, a change in velocity V obtained by integrating the signal of the acceleration in a range from 0 to 2 × t can be expressed by the following expression (1).

$$V = \{2 × 9.8 × amax × (2 × t)\}/\pi \quad (1)$$

Then, the damage determination based on the damage boundary curve can be performed by the change in velocity V and the maximum acceleration amax.

FIG. 9 shows a damage boundary curve 9. The damage boundary curve 9 may be abbreviated as DBC. The damage boundary curve 9 shown in FIG. 9 is defined on a plane in which the horizontal axis represents the change in velocity V and the vertical axis represents the maximum acceleration amax. The maximum acceleration amax is also referred to as a peak acceleration. Among the regions partitioned by the damage boundary curve 9, the region on the side where the maximum acceleration amax and the change in velocity V are larger is a damaged region RD, and the region on the side where the maximum acceleration amax and the change in velocity V are smaller is a non-damaged region RND. When the maximum acceleration amax and the change in velocity V belonging to the damage region RD are applied to the object, the object may be damaged. The damage boundary curve 9 is determined, for example, by evaluating whether the object is subjected to an impact and damaged.

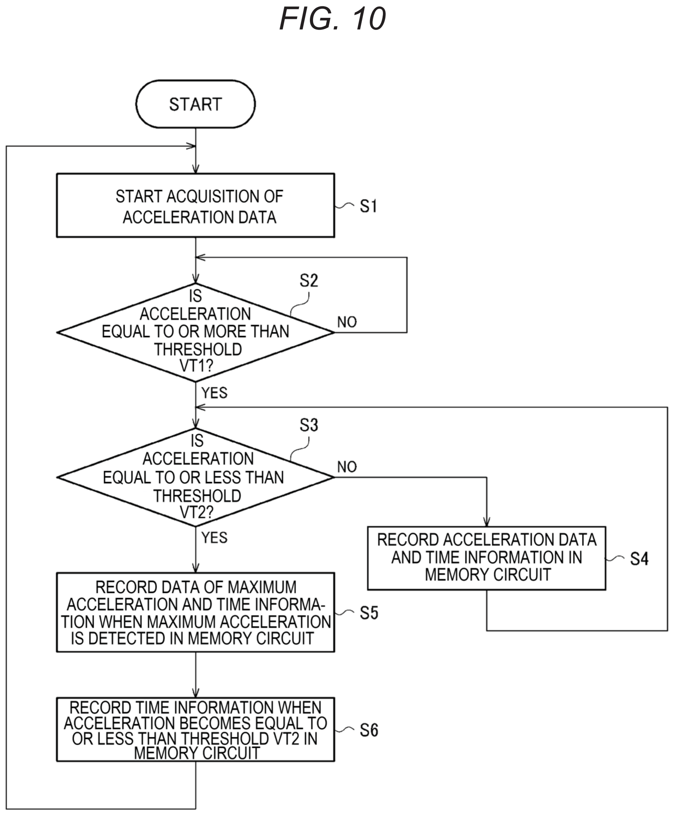

FIG. 10 is a flowchart illustrating a processing example of the present embodiment. When the acquisition of the acceleration data is started, the processing circuit 40 determines whether the acceleration detected by the acceleration sensor 12 is equal to or more than the threshold VT1 (steps S1 and S2). Then, when the acceleration becomes equal to or more than the threshold VT1, the processing circuit 40 determines whether the acceleration becomes equal to or less than the threshold VT2, and when the acceleration does not become equal to or less than the threshold VT2, records the acceleration data and the time information in the memory circuit 50 (steps S3 and S4). That is, the acceleration data and the time information when the acceleration data is detected are stored in the memory circuit 50 in association with each other. In contrast, when the acceleration is equal to or less than the threshold VT2, the processing circuit 40 records the data of the maximum acceleration and the time information when the maximum acceleration is detected in the memory circuit 50 (step S5). The time information when the acceleration becomes equal to or less than the threshold VT2 is recorded in the memory circuit 50 (step S6), that is, the data of the maximum acceleration amax in FIG. 8, tma, which is time information when the maximum acceleration amax is detected, and ten, which is time information when the acceleration becomes equal to or less than the threshold VT2 are stored in the memory circuit 50 as the impact log information.

According to the configuration, the time t and ta = 2 × t in FIG. 8 can be obtained from tma and ten. Then, the change in velocity V can be obtained from the maximum acceleration amax and ta = 2 × t using the above expression (1). Therefore, in the damage boundary curve 9 of FIG. 9, it is possible to determine whether the change in velocity V and the maximum acceleration amax belonging to the damage region RD are applied to the object, and it is possible to determine the occurrence of damage to the object with less data and simpler processing.

FIG. 11 is a flowchart illustrating another processing example of the present embodiment. Steps S11, S12, S14, S15, and S16 in FIG. 11 are the same as steps S1, S2, S4, S5, and S6 in FIG. 10, and FIG. 11 is different from FIG. 10 in step S13. That is, in step S3 of FIG. 10, it is determined whether the acceleration becomes equal to or less than the threshold VT2 after becoming equal to or more than the threshold VT1. In contrast, in step S13 of FIG. 11, it is determined whether a predetermined time has elapsed after the acceleration becomes equal to or more than the threshold VT1. That is, in FIG. 10, the impact log information is recorded with a period after the acceleration becomes equal to or more than the threshold VT1 and before the acceleration becomes equal to or less than the threshold VT2 as the retention period. In contrast, in FIG. 11, the impact log information is recorded with a period until a predetermined time elapses after the acceleration becomes equal to or more than the threshold VT1 as the retention period. For example, when an impact is applied to the object and a long time elapses after the acceleration becomes equal to or more than the threshold VT1, it is considered that the acceleration becomes 0. Therefore, by waiting for the elapse of the predetermined time required for the acceleration to become 0 as in step S13, the change in velocity V can be obtained by the calculation method described in FIG. 8 or the like, and it can be determined whether the impact belonging to the damaged region RD is applied to the object. After the predetermined time elapses, the generation of the impact log information by the acceleration data is not performed, and thus it is possible to implement reduction in power consumption and saving of the memory capacity of the memory circuit 50.

2. Impact log information

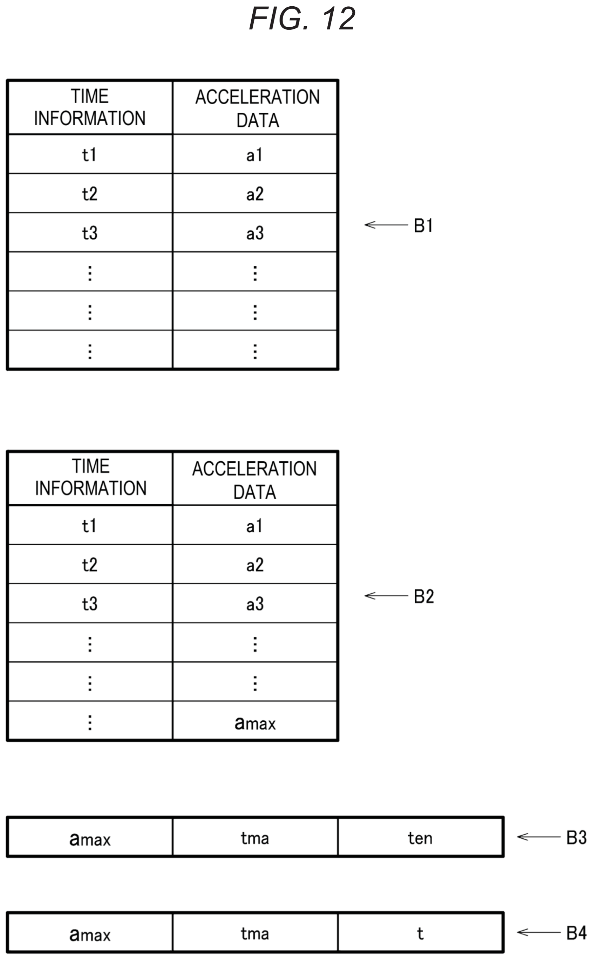

Next, the details of the impact log information will be described. FIG. 12 shows various examples of impact log information in the present embodiment. In B1 of FIG. 12, the processing circuit 40 records, in the memory circuit 50, impact log information in which each piece of acceleration data a1, a2, a3,..., which is a plurality of pieces of acceleration data, is associated with t1, t2, t3,..., which is time information when each piece of acceleration data is detected. For example, a1 as acceleration data and t1 as time information when a1 is detected are recorded in association with each other, and a2 as acceleration data and t2 as time information when a2 is detected are recorded in association with each other. According to the configuration, it is possible to more accurately determine whether damage has occurred in the object based on the plurality of pieces of acceleration data and the plurality of pieces of time information corresponding thereto. That is, it is possible to more accurately determine whether damage has occurred than the determination based on one piece of acceleration data and the time information thereof as described in JP-A-2019-152563.

In this case, as illustrated in B2 of FIG. 12, the processing circuit 40 may further record the data of the maximum acceleration amax in the memory circuit 50 in addition to the acceleration data and the time information of B1. As described above, by storing the data of the maximum acceleration amax, it is possible to more reliably determine whether an impact that causes damage is applied to the object. That is, in the damage boundary curve 9 of FIG. 9, it is determined whether damage has occurred in the object depending on whether the maximum acceleration amax and the change in velocity V belong to the damage region RD. Therefore, it is possible to more reliably determine whether an impact that causes damage is applied to the object by recording the maximum acceleration amax as the impact log information. The maximum acceleration amax can be detected by obtaining a local maximum value from the accelerations at the times before and after the maximum acceleration amax.

In B3 of FIG. 12, the processing circuit 40 records data of the maximum acceleration amax, tma as time information when the maximum acceleration amax is detected, and ten as time information when the acceleration becomes equal to or less than the threshold VT2 for determination of the end of retention of the impact log in the memory circuit 50 as the impact log information. According to the configuration, it is possible to determine whether an impact that causes damage is applied to the object based on the data of the maximum acceleration amax and tma and ten as the time information with less data and simpler calculation. For example, in FIG. 8, the time t from tma to ten can be obtained from tma as the time information at the maximum acceleration amax and ten as the time information when the acceleration becomes equal to or less than the threshold VT2, and ta = 2 × t, which is the time in which the impact is applied, can be obtained. Then, the change in velocity V is obtained from the maximum acceleration amax and ta = 2 × t by the above expression (1), and it can be determined whether the change in velocity V and the maximum acceleration amax belonging to the damage region RD are applied to the object in the damage boundary curve 9 of FIG. 9, and the occurrence of damage to the object can be determined.

In B4 of FIG. 12, the processing circuit 40 records data of the maximum acceleration amax and t as time information after the maximum acceleration amax is detected and before the acceleration becomes equal to or less than the threshold VT2 in the memory circuit 50 as impact log information. That is, in FIG. 8, the time t from tma to ten is directly obtained. According to the configuration, it is also possible to determine whether an impact that causes damage is applied to the object based on the data of the maximum acceleration amax and t as the time information from tma to ten with less data and simpler calculation.

Furthermore, in the present embodiment, the processing circuit 40 may perform damage determination using a damage boundary curve based on the plurality of pieces of acceleration data and time information in the retention period TH in FIG. 8, and record result information of the damage determination in the memory circuit 50 as impact log information. For example, when the maximum acceleration and the change in velocity belong to the damage region RD of the damage boundary curve 9 in FIG. 9, the processing circuit 40 records the result information of the damage determination indicating that damage has occurred in the memory circuit 50 as impact log information. In contrast, when the maximum acceleration and the change in velocity belong to the non-damage region RND, the processing circuit 40 records the result information of the damage determination indicating that no damage has occurred in the memory circuit 50 as impact log information. According to the configuration, the result information of the damage determination performed by the processing circuit 40 of the real-time clock device 20 is stored in the memory circuit 50 as the impact log information. Therefore, the external processing device 100 or the like can acquire the result of the damage determination based on the damage boundary curve only by reading the impact log information from the memory circuit 50.

Moreover, in the present embodiment, as illustrated in FIGS. 3 and 4, the electronic apparatus 2 includes the real-time clock device 20 of the present embodiment, the acceleration sensor 12, and the processing device 100 that reads impact log information from the real-time clock device 20. According to the configuration, it is possible to determine damage to the electronic apparatus 2 during transportation or the like using the impact log information recorded in the memory circuit 50 of the real-time clock device 20.

Then, in the present embodiment, the processing device 100 performs damage determination using the damage boundary curve based on the impact log information. For example, when the maximum acceleration and the change in velocity belong to the damage region RD of the damage boundary curve 9 in FIG. 9, the processing device 100 determines that damage has occurred in the damage determination. In contrast, when the maximum acceleration and the change in velocity belong to the non-damage region RND, the processing device 100 determines that no damage has occurred in the damage determination. According to the configuration, the processing device 100 reads the impact log information recorded in the memory circuit 50 of the real-time clock device 20, so that it is possible to easily determine whether damage due to an impact has occurred in the object of impact detection.

3. Impact Logger

Next, the details of the impact logger 10 of the present embodiment will be described. As described with reference to FIG. 3, the impact logger 10 of the present embodiment includes the real-time clock device 20 and the acceleration sensor 12. As described with reference to FIG. 4, the impact logger 10 may further include the battery 19.

In FIG. 13, the impact logger 10 includes the acceleration sensor module 80 in which the acceleration sensor 12 is housed in a package (first package) and the real-time clock module 82 in which the real-time clock device 20 is housed in a package (second package). That is, the acceleration sensor 12 and the real-time clock device 20 are housed in separate packages. Specifically, in the acceleration sensor module 80 of FIG. 13, the acceleration sensor 12 and a detection circuit 16 of the acceleration sensor 12 are housed in a package. Furthermore, in the real-time clock module 82, the integrated circuit device 90 of FIG. 14 described later and the vibrator 22 are housed in a package. The integrated circuit device 90 is a circuit device provided with the clocking circuit 30, the processing circuit 40, the memory circuit 50, the interface circuit 60, and the like of the real-time clock device 20. The package is, for example, a ceramic package, but may be a resin package or the like.

According to the configuration, the impact logger 10 can be implemented by the acceleration sensor module 80 and the real-time clock module 82 separately housed in the packages. For example, the impact logger 10 can be implemented by mounting the existing acceleration sensor module 80 and real-time clock module 82 on a substrate or the like. The impact log information can be generated based on the acceleration detected by the acceleration sensor module 80 and the time information clocked by the clocking circuit 30 of the real-time clock device 20, and can be recorded in the memory circuit 50 of the real-time clock device 20.

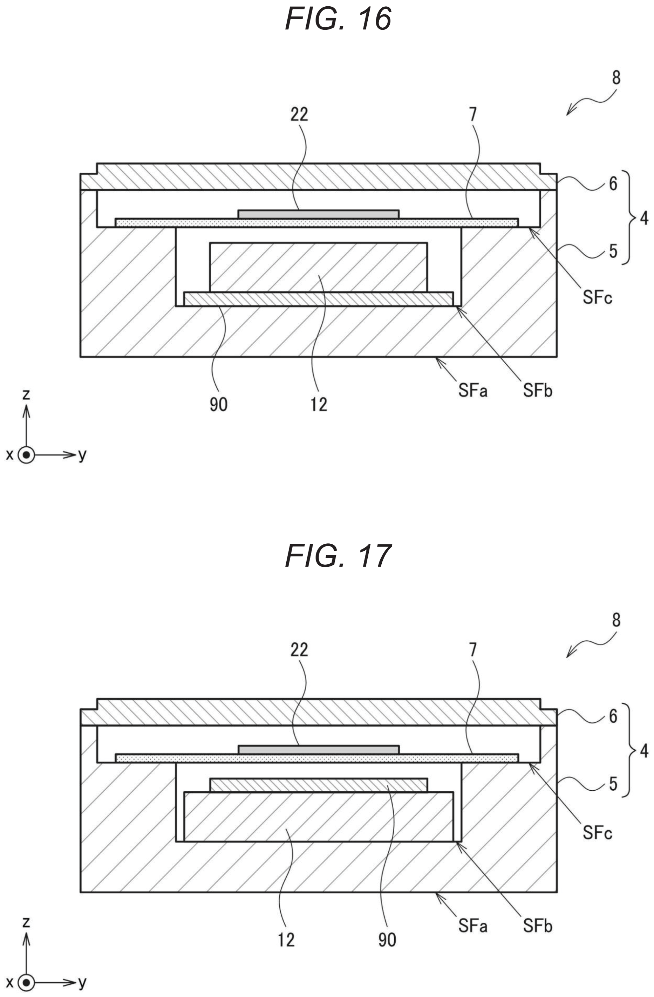

In FIG. 14, the impact logger 10 is implemented by the impact logger module 8 in which the integrated circuit device 90 including the clocking circuit 30, the processing circuit 40, the memory circuit 50, and the interface circuit 60, and the acceleration sensor 12 are housed in a package 4 described later with reference to FIGS. 16 and 17. Specifically, in FIG. 14, for example, the integrated circuit device 90, the acceleration sensor 12, and the vibrator 22 are housed in the package 4. The integrated circuit device 90 includes the oscillation circuit 24 that oscillates the vibrator 22, the clocking circuit 30, the processing circuit 40, the memory circuit 50, the interface circuit 60, and the detection circuit 16 of the acceleration sensor 12. The package 4 such as a ceramic package in which the acceleration sensor 12, the vibrator 22, and the integrated circuit device 90 are housed can be considered as one component mounted on a printed circuit board or the like, and is very small compared to a general electronic apparatus in which a plurality of components are combined and housed in a housing. As an example, the length of the maximum side of the package 4 is 20 mm or less. As described above, by implementing the impact logger 10 using the impact logger module 8 in which the integrated circuit device 90 and the acceleration sensor 12 are housed in the small package 4, it is possible to reduce the size and cost of the impact logger 10 as compared with the impact detector as described in JP-A-2019-152563.

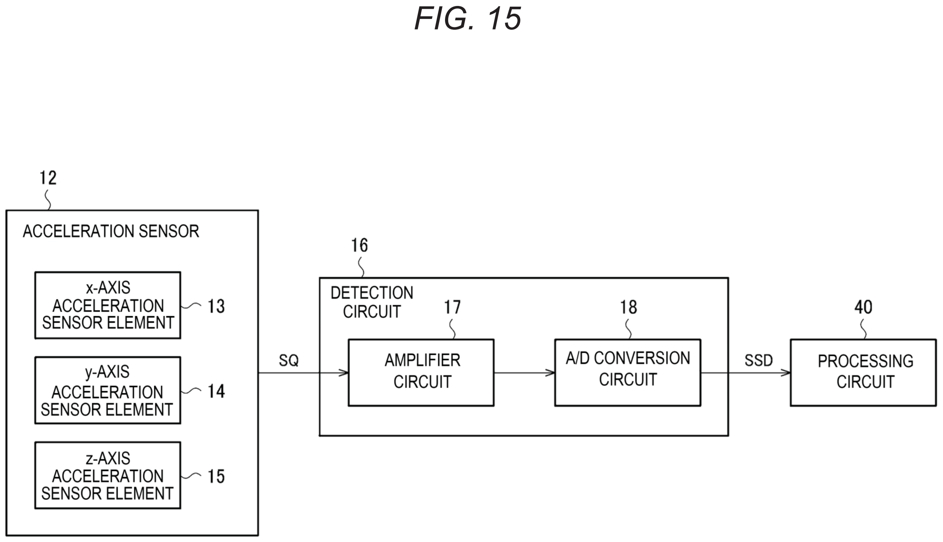

FIG. 15 shows a detailed configuration example of the acceleration sensor 12 and the detection circuit 16. The acceleration sensor 12 includes an x-axis acceleration sensor element 13, a y-axis acceleration sensor element 14, and a z-axis acceleration sensor element 15. Here, an example in which the acceleration sensor 12 is a three-axis acceleration sensor is shown, but the acceleration sensor 12 may be a one-axis or two-axis acceleration sensor. The acceleration sensor 12 has a substantially plate-like shape parallel to the xy plane. In a specific example, the acceleration sensor 12 includes a support substrate having a bottom surface parallel to the xy plane and a lid bonded to the support substrate. The x-axis acceleration sensor element 13, the y-axis acceleration sensor element 14, and the z-axis acceleration sensor element 15 are formed on the support substrate and covered with the lid.

The x-axis acceleration sensor element 13 includes an interdigital fixed transducer fixed to the support substrate, a movable portion configured to be movable with respect to the support substrate, and an interdigital movable transducer fixed to the movable portion. Each digit of the fixed transducer and each digit of the movable transducer are arranged to face each other in the x direction. When an acceleration in the x direction is applied to the x-axis acceleration sensor element 13, the movable portion moves in the x direction and the distance between the digits changes, so that the capacitance between the digits changes. The detection circuit 16 detects the acceleration in the x direction as the acceleration information SSD by detecting the change in the capacitance. The y-axis acceleration sensor element 14 has the same configuration.

The z-axis acceleration sensor element 15 includes an interdigital fixed transducer fixed to the support substrate, a movable portion swingable about a rotation axis parallel to the xy plane, and an interdigital movable transducer fixed to the movable portion. Each digit of the fixed transducer and each digit of the movable transducer are arranged to face each other in the x direction or the y direction. When an acceleration in the z direction is applied, the movable portion swings and the overlapping area between the digits changes, so that the capacitance between the digits changes. The detection circuit 16 detects the acceleration in the z direction as acceleration information SSD (acceleration data) by detecting the change in the capacitance.

The detection circuit 16 includes an amplifier circuit 17 and an A/D conversion circuit 18. The amplifier circuit 17 and the A/D conversion circuit 18 may be provided for each of the x-axis acceleration sensor element 13, the y-axis acceleration sensor element 14, and the z-axis acceleration sensor element 15. Alternatively, the detection circuit 16 may include a selector, and the selector may select the output signals of the x-axis acceleration sensor element 13, the y-axis acceleration sensor element 14, and the z-axis acceleration sensor element 15 in a time division manner and output the output signals to the amplifier circuit 17.

The detection circuit 16 includes the amplifier circuit 17 and the A/D conversion circuit 18. Here, SQ is the output signal of the x-axis acceleration sensor element 13, but the same applies to the output signals of the y-axis acceleration sensor element 14 and the z-axis acceleration sensor element 15. The amplifier circuit 17 performs charge-voltage conversion (Q/V conversion) and amplifies the output signal SQ of the x-axis acceleration sensor element 13. The A/D conversion circuit 18 performs A/D conversion on the output signal of the amplifier circuit 17, and outputs the x-axis acceleration as a result as the acceleration information SSD. The processing on the output signals of the y-axis acceleration sensor element 14 and the z-axis acceleration sensor element 15 is similarly performed.

FIG. 17 shows a first structure example of the impact logger module 8. In the following description, the illustration of in-package wiring and external coupling terminals is omitted. Hereinafter, the +z direction may be referred to as upper, and the -z direction may be referred to as lower.

The package 4 includes a base 5 having a recess and a lid 6 as a lid of the base 5. A bottom surface SFa of the base 5 is parallel to the xy plane, and the recess of the base 5 opens upward. The lid 6 covers the recess so that the edge of the lid 6 is joined to the edge of the recess of the base 5, thereby sealing the integrated circuit device 90, the acceleration sensor 12, and the vibrator 22 within the package 4.

The recess of the base 5 has a bottom surface SFb and a step surface SFc provided above the bottom surface SFb. The integrated circuit device 90 is disposed on the bottom surface SFb, and the acceleration sensor 12 is disposed to overlap the device. The integrated circuit device 90 is, for example, a bare chip. The acceleration sensor 12 is in the form of, for example, a substantially rectangular parallelepiped. The integrated circuit device 90 and the acceleration sensor 12 are disposed such that the thickness directions thereof are in the z direction. The vibrator 22 is, for example, a quartz crystal vibrator, and is configured on a quartz crystal relay substrate 7. The end portion of the relay substrate 7 is joined to the step surface SFc, thereby housing the vibrator 22 in the base 5. In plan view, the vibrator 22 may overlap the integrated circuit device 90 and the acceleration sensor 12 or may overlap only the integrated circuit device 90.

The integrated circuit device 90 and the acceleration sensor 12 are coupled by in-package wiring. The in-package wiring includes bonding wires or wires provided inside or on the inner surface of the structure of the base 5. For example, the integrated circuit device 90 has a pad formed of the uppermost layer metal, and the acceleration sensor 12 has a terminal for coupling wires. The pad of the integrated circuit device 90 and the terminal of the acceleration sensor 12 may be coupled by a bonding wire, or may be coupled once via the wiring of the base 5. In the latter case, the pad of the integrated circuit device 90 and the terminal of the acceleration sensor 12 may be coupled to the wiring of the base 5 by a bonding wire or a bump. Similarly, the integrated circuit device 90 and the vibrator 22 are coupled by in-package wiring.

FIG. 17 shows a second structure example of the impact logger module 8. In the second structure example of FIG. 17, the acceleration sensor 12 is disposed on the bottom surface SFb, and the integrated circuit device 90 is disposed to overlap the acceleration sensor 12. The impact logger module 8 is not limited to the structure examples of FIGS. 16 and 17. For example, the vibrator 22 may be disposed on the bottom surface of the recess of the base 5 at a position not overlapping the integrated circuit device 90 in plan view.

In the impact logger 10 implemented by the impact logger module 8 as shown in FIG. 16 or 17, the acceleration sensor 12, the integrated circuit device 90, and the vibrator 22 are housed in the small package 4 mounted on a substrate. The package 4 can be considered as one component mounted on a printed circuit board or the like, and is very small as compared with a general electronic apparatus in which a plurality of components are combined and housed in a housing. Therefore, according to the present embodiment, the very small impact logger 10 can be implemented.

As described above, the real-time clock device according to the present embodiment includes a clocking circuit that generates time information and a memory circuit. The real-time clock device includes the processing circuit that records impact log information based on the plurality of pieces of acceleration data and time information in the retention period of the impact log in the memory circuit when it is determined that an impact event has occurred based on the acceleration detected by the acceleration sensor, and the interface circuit that outputs the impact log information recorded in the memory circuit.

According to the present embodiment, when the impact event occurs, the impact log information based on the plurality of pieces of acceleration data and the time information in the retention period of the impact log is recorded in the memory circuit, and the impact log information can be output to the outside via the interface circuit. Since the impact log information is information based on the plurality of pieces of acceleration data and the time information in the retention period of the impact log, it is possible to more accurately determine the occurrence of damage to the object due to the impact as compared with a case where the determination is performed based on one piece of acceleration data.

In the present embodiment, the retention period may be a period including the time when the acceleration reaches the maximum acceleration in the impact event.

According to the configuration, the impact log information based on the maximum acceleration can be recorded in the memory circuit, and the damage determination by the damage boundary curve based on the maximum acceleration can be implemented.

In the present embodiment, the processing circuit may start recording the impact log information when the acceleration becomes equal to or more than the first threshold.

According to the configuration, it is not necessary to record the impact log information until the acceleration becomes equal to or more than the first threshold, and it is possible to implement reduction in power consumption of the real-time clock device, saving of the memory capacity of the memory circuit, and the like.

Furthermore, in the present embodiment, the processing circuit may record the impact log information in the memory circuit with a period after the acceleration becomes equal to or more than the first threshold and before the acceleration becomes equal to or less than the second threshold as the retention period.

According to the configuration, the impact log information can be obtained using the acceleration data in the period after the acceleration becomes equal to or more than the first threshold and before the acceleration becomes equal to or less than the second threshold, and can be recorded in the memory circuit. Therefore, it is possible to acquire impact log information necessary for the more accurate damage determination.

In the present embodiment, the second threshold may be smaller than the first threshold.

As described above, when the second threshold is smaller, the impact log can be recorded in a longer retention period, and the more accurate damage determination can be performed.

In the present embodiment, the processing circuit may record the impact log information in the memory circuit with a period until a predetermined time elapses after the acceleration becomes equal to or more than the first threshold as the retention period.

According to the configuration, the impact log information can be obtained using the acceleration data in the period until the predetermined time elapses after the acceleration becomes equal to or more than the first threshold, and can be recorded in the memory circuit. Therefore, it is possible to acquire impact log information necessary for the more accurate damage determination.

In the present embodiment, the processing circuit may record, in the memory circuit, impact log information in which each piece of acceleration data of the plurality of pieces of acceleration data is associated with time information when each piece of acceleration data is detected.

According to the configuration, it is possible to more accurately determine whether damage has occurred in the object based on the plurality of pieces of acceleration data and the plurality of pieces of time information corresponding thereto.

In the present embodiment, the processing circuit may further record data of the maximum acceleration in the memory circuit.

As described above, by storing the data of the maximum acceleration, it is possible to more reliably determine whether an impact that causes damage is applied to the object.

In the present embodiment, the processing circuit may record the data of the maximum acceleration, the time information when the maximum acceleration is detected, and the time information when the acceleration becomes equal to or less than the threshold for determination of the end of retention of the impact log in the memory circuit as the impact log information.

According to the configuration, it is possible to determine whether an impact that causes damage is applied to the object with less data and simpler calculation.

In the present embodiment, the processing circuit may record the data of the maximum acceleration and the time information after the maximum acceleration is detected and before the acceleration becomes equal to or less than the threshold for determination of the end of retention of the impact log in the memory circuit as the impact log information.

According to the configuration, it is possible to determine whether an impact that causes damage is applied to the object with less data and simpler calculation.

In the present embodiment, the processing circuit may perform the damage determination using the damage boundary curve based on the plurality of pieces of acceleration data and the time information in the retention period, and record the result information of the damage determination in the memory circuit as the impact log information.

According to the configuration, the result information of the damage determination performed by the processing circuit of the real-time clock device is stored in the memory circuit as the impact log information, and the result of the damage determination based on the damage boundary curve can be obtained only by reading the impact log information from the memory circuit.

The impact logger of the present embodiment includes the real-time clock device described above and the acceleration sensor.

According to the configuration, it is possible to implement the impact logger in which the impact log information based on the acceleration detected by the acceleration sensor is recorded in the memory circuit of the real-time clock device.

In the present embodiment, the battery that supplies power to the real-time clock device and the acceleration sensor may be provided.

According to the configuration, even when power is not supplied from the outside, the real-time clock device and the acceleration sensor can operate based on the power supply voltage from the battery.

In the present embodiment, the real-time clock device may include the sensor interface circuit that receives acceleration data from the acceleration sensor.

According to the configuration, the sensor interface circuit receives the acceleration data from the acceleration sensor outside the real-time clock device and outputs the acceleration data to the processing circuit, and thus it is possible to implement the generation of the impact log information by the processing circuit.

In the present embodiment, the real-time clock module in which the real-time clock device is housed in the package and the acceleration sensor module in which the acceleration sensor is housed in the package may be provided.

According to the configuration, the impact logger can be implemented by the acceleration sensor module and the real-time clock module separately housed in the packages.

In the present embodiment, the package in which the integrated circuit device including the clocking circuit, the memory circuit, the processing circuit, and the interface circuit, and the acceleration sensor are housed may be provided.

As described above, by implementing the impact logger using the impact logger module in which the integrated circuit device and the acceleration sensor are housed in the package, it is possible to reduce the size and cost of the impact logger.

The electronic apparatus according to the present embodiment includes the real-time clock device described above, the acceleration sensor, and the processing device that reads impact log information from the real-time clock device.

According to the configuration, the damage of the electronic apparatus can be determined using the impact log information recorded in the memory circuit of the real-time clock device.

In the present embodiment, the processing device may perform the damage determination using the damage boundary curve based on the impact log information.

According to the configuration, the processing device reads the impact log information recorded in the memory circuit of the real-time clock device, and thus it is possible to easily determine whether the damage due to the impact has occurred in the object of impact detection.

While the embodiment has been described in detail above, a person skilled in the art can readily understand that many modifications can be made without substantially departing from the novel matters and effects of the present disclosure. Therefore, all such modifications are within the scope of the present disclosure. For example, a term described at least once together with a different term having a broader meaning or the same meaning in the specification or the drawings can be replaced with the different term anywhere in the specification or the drawings. Furthermore, all combinations of the present embodiment and the modifications also fall within the scope of the present disclosure. The configurations and operations of the real-time clock device, the impact logger, and the electronic apparatus are not limited to those described in the present embodiment, and various modifications can be made.

**Claims**

1. A real-time clock device comprising:

   a clocking circuit that generates time information;
   a memory circuit;
   a processing circuit that records impact log information based on a plurality of pieces of acceleration data and the time information in a retention period of an impact log in the memory circuit when it is determined that an impact event has occurred based on an acceleration detected by an acceleration sensor; and
   an interface circuit that outputs the impact log information recorded in the memory circuit.

2.  The real-time clock device according to claim 1, wherein
    the retention period is a period including a time when the acceleration reaches a maximum acceleration in the impact event.

3.  The real-time clock device according to claim 1, wherein
    the processing circuit starts recording the impact log information when the acceleration becomes equal to or more than a first threshold.

4.  The real-time clock device according to claim 3, wherein
    the processing circuit records the impact log information in the memory circuit with a period after the acceleration becomes equal to or more than the first threshold and before the acceleration becomes equal to or less than a second threshold as the retention period.

5.  The real-time clock device according to claim 3, wherein
    the processing circuit records the impact log information in the memory circuit with a period until a predetermined time elapses after the acceleration becomes equal to or more than the first threshold as the retention period.

6.  The real-time clock device according to claim 1, wherein
    the processing circuit records, in the memory circuit, the impact log information in which each piece of acceleration data of the plurality of pieces of acceleration data is associated with the time information when each piece of acceleration data is detected.

7.  The real-time clock device according to claim 1, wherein
    the processing circuit records data of a maximum acceleration, the time information when the maximum acceleration is detected, and the time information when the acceleration becomes equal to or less than a threshold for determination of an end of retention of an impact log in the memory circuit as the impact log information.

8.  The real-time clock device according to claim 1, wherein
    the processing circuit performs damage determination using a damage boundary curve based on the plurality of pieces of acceleration data and the time information in the retention period, and records result information of the damage determination in the memory circuit as the impact log information.

9.  An impact logger comprising:

    the real-time clock device according to any one of the preceding claim 1 to claim 8; and
    the acceleration sensor.

10. The impact logger according to claim 9, further comprising a battery that supplies power to the real-time clock device and the acceleration sensor.

11. The impact logger according to claim 9, wherein
    the real-time clock device includes a sensor interface circuit that receives data of the acceleration from the acceleration sensor.

12. The impact logger according to claim 9, further comprising:

    a real-time clock module in which the real-time clock device is housed in a package; and
    an acceleration sensor module in which the acceleration sensor is housed in a package.

13. The impact logger according to claim 9, further comprising a package in which an integrated circuit device including the clocking circuit, the memory circuit, the processing circuit, and the interface circuit and the acceleration sensor are housed.

14. An electronic apparatus comprising:

    the real-time clock device according to any one of the preceding claim 1 to claim 8;
    the acceleration sensor; and
    a processing device that reads the impact log information from the real-time clock device.

15. The electronic apparatus according to claim 14, wherein
    the processing device performs damage determination using a damage boundary curve based on the impact log information.

*FIG. 1*

## FIG. 2

REAL-TIME CLOCK DEVICE 20

POWER SUPPLY VOLTAGE SELECTION CIRCUIT 26

MAIN POWER SUPPLY

BATTERY

INTERNAL POWER SUPPLY VOLTAGE

OSCILLATION CIRCUIT 24

CLOCKING CIRCUIT 30

CK

22

TM

ACCELERATION SENSOR 12

DA

SENSOR INTERFACE CIRCUIT 62

DA

PROCESSING CIRCUIT 40

INTERFACE CIRCUIT 60

LG

PROCESSING DEVICE 100

LG

LG

MEMORY CIRCUIT 50

EP 4 779 319 A1

## FIG. 3

## FIG. 4

## FIG. 5

## FIG. 6

FIG. 7

EP 4 779 319 A1

# FIG. 8

$$V = \frac{2 \times 9.8 \times a_{max} \times (2 \times t)}{\pi}$$

# FIG. 9

# FIG. 10

```
                        ┌──────────┐
                        │  START   │
                        └────┬─────┘
                             │
    ┌────────────────────────▼────────────────────┐
    │   ┌─────────────────────────────────┐        │
    │   │   START ACQUISITION OF          │  ~ S1  │
    │   │   ACCELERATION DATA             │        │
    │   └─────────────────────────────────┘        │
```

START ACQUISITION OF ACCELERATION DATA — S1

IS ACCELERATION EQUAL TO OR MORE THAN THRESHOLD VT1? — S2  NO

YES

IS ACCELERATION EQUAL TO OR LESS THAN THRESHOLD VT2? — S3  NO

RECORD ACCELERATION DATA AND TIME INFORMATION IN MEMORY CIRCUIT — S4

YES

RECORD DATA OF MAXIMUM ACCELERATION AND TIME INFORMATION WHEN MAXIMUM ACCELERATION IS DETECTED IN MEMORY CIRCUIT — S5

RECORD TIME INFORMATION WHEN ACCELERATION BECOMES EQUAL TO OR LESS THAN THRESHOLD VT2 IN MEMORY CIRCUIT — S6

# FIG. 11

START

S11 — START ACQUISITION OF ACCELERATION DATA

S12 — IS ACCELERATION EQUAL TO OR MORE THAN THRESHOLD VT1?
NO

S13 — HAS PREDETERMINED TIME ELAPSED?
NO

YES

S14 — RECORD ACCELERATION DATA AND TIME INFORMATION IN MEMORY CIRCUIT

S15 — RECORD DATA OF MAXIMUM ACCELERATION AND TIME INFORMATION WHEN MAXIMUM ACCELERATION IS DETECTED IN MEMORY CIRCUIT

S16 — RECORD TIME INFORMATION WHEN ACCELERATION BECOMES EQUAL TO OR LESS THAN THRESHOLD VT2 IN MEMORY CIRCUIT

## FIG. 12

| TIME INFORMATION | ACCELERATION DATA |
|---|---|
| t1 | a1 |
| t2 | a2 |
| t3 | a3 |
| ⋮ | ⋮ |
| ⋮ | ⋮ |
| ⋮ | ⋮ |

← B1

| TIME INFORMATION | ACCELERATION DATA |
|---|---|
| t1 | a1 |
| t2 | a2 |
| t3 | a3 |
| ⋮ | ⋮ |
| ⋮ | ⋮ |
| ⋮ | $a_{max}$ |

← B2

| $a_{max}$ | tma | ten |
|---|---|---|

← B3

| $a_{max}$ | tma | t |
|---|---|---|

← B4

FIG. 13

EP 4 779 319 A1

## FIG. 14

INTEGRATED CIRCUIT DEVICE
10
8
IMPACT LOGGER MODULE
22
90

OSCILLATION CIRCUIT
30
CLOCKING CIRCUIT
INTERFACE CIRCUIT
24

12
ACCELERATION SENSOR
DETECTION CIRCUIT
16
PROCESSING CIRCUIT
40
MEMORY CIRCUIT
60
50

## FIG. 15

## FIG. 16

## FIG. 17

Europäisches
Patentamt
European
Patent Office
Office européen
des brevets

# EUROPEAN SEARCH REPORT

**Application Number**

EP 26 15 2068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0161868 A (KOREA ELECTRIC POWER CORP [KR]) 7 December 2022 (2022-12-07) * page 5, paragraph [0012] - page 9, paragraph [0077]; claim 1; figures 1, 2 * ----- | 1-15 | INV. G01P1/12 G01P15/08 |
| X | US 2012/079870 A1 (RAMIREZ ANIBAL DIEGO [US]) 5 April 2012 (2012-04-05) * page 2, paragraph [0019] - page 4, paragraph [0052]; figures 1-5 * ----- | 1-15 | |
| X | JP 2002 099346 A (TOSHIBA CORP) 5 April 2002 (2002-04-05) * page 2, paragraph [0008] - page 5, paragraph [0034]; figures 1-4 * ----- | 1-15 | |
| X | DE 42 22 808 A1 (PEISELER GOETZ [DE]) 27 January 1994 (1994-01-27) * column 2, line 6 - column 4, line 63; figures 1, 2 * ----- | 1-15 | |

**TECHNICAL FIELDS SEARCHED (IPC)**

G01P

The present search report has been drawn up for all claims

| Place of search | Date of completion of the search | Examiner |
|---|---|---|
| Munich | 21 May 2026 | Springer, Oliver |

EPO FORM 1503 03.82 (P04C01)

## ANNEX TO THE EUROPEAN SEARCH REPORT
## ON EUROPEAN PATENT APPLICATION NO.

EP 26 15 2068

This annex lists the patent family members relating to the patent documents cited in  the above-mentioned European search report.
The members are as contained in the European Patent Office EDP file on
The European Patent Office is in no way liable for these particulars which are merely given for the purpose of information.

21-05-2026

| Patent document cited in search report | Publication date | Patent family member(s) | Publication date |
|---|---|---|---|
| KR 20220161868 A | 07-12-2022 | NONE | |
| US 2012079870 A1 | 05-04-2012 | NONE | |
| JP 2002099346 A | 05-04-2002 | NONE | |
| DE 4222808 A1 | 27-01-1994 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2025006508 A

- JP 2019152563 A